# EUROPÄISCHE PATENTSCHRIFT

(11) **EP 0 703 697 B1**
(45) Veröffentlichungstag und Bekanntmachung des Hinweises auf die Patenterteilung: **28.04.1999**
(21) Anmeldenummer: 95114787.5
(22) Anmeldetag: 20.09.1995
(51) Int. Cl.: H04N 1/40, H04N 1/405

(54) **Verfahren zum Erzeugen einer zweidimensionalen Bildmatrix von Bildpunkten und Filmkartenscanner zur Durchführung dieses Verfahrens**
Method of obtaining a twodimensional image matrix and film card scanner therefor
Procédé pour générer une matrice d'image bidimensionelle à partir de points d'images et balayeur de cartes à film mettant en oeuvre ce procédé

(30) Priorität: 20.09.1994 DE 4433440
(43) Veröffentlichungstag der Anmeldung: 27.03.1996
(73) Patentinhaber: Microbox Dr. Welp GmbH, D-61231 Bad Nauheim (DE)
(72) Erfinder: Girke, Michael, D-61231 Bad Nauheim (DE)
(74) Vertreter: Schlagwein, Udo, Dipl.-Ing.

(56) Entgegenhaltungen:
- US-A- 5 065 257
- PATENT ABSTRACTS OF JAPAN vol. 005, no. 074 (E-057), 16.Mai 1981 & JP-A-56 023072 (RICOH CO LTD), 4.März 1981,

## Beschreibung

Die Erfindung betrifft ein Verfahren zum Erzeugen einer zweidimensionalen, binären Bildmatrix von Bildpunkten mittels eines Rechners und eines Scanners, welcher ein Bild einer Vorlage abtastet und dabei eine Bildmatrix mit Bildpunkten hoher Grauabstufung gewinnt und bei dem aufgrund der Beschaffenheit des Bildes der Vorlage Schwellwerte für die Hell/Dunkel-Entscheidung bei der Erzeugung der binären Bildmatrix aus dem mit Grauabstufungen gewonnenen Bildmatrix erzeugt werden. Weiterhin betrifft die Erfindung einen Filmkartenscanner zur Durchführung dieses Verfahrens.

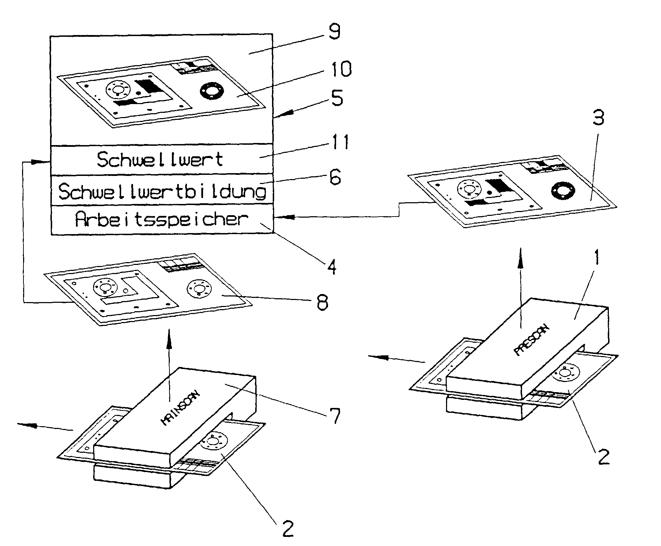

Um die auf dem jeweiligen Filmbild von Filmdatenkarten enthaltene Information elektronisch in einem Rechner verarbeiten zu können, sind Filmkartenscanner bekannt geworden, welche das Filmbild durchleuchten und zeilenweise scannen. Filmbilder haben oftmals eine sehr unterschiedliche Hintergrunddichte, was beispielsweise durch Vergilben einer durch das Filmbild wiedergegebenen Zeichnung verursacht sein kann. Bei Blaupausen ist der Hintergrund statt weiß blau, so daß die Unterschiede zwischen den dunklen Linien auf der Zeichnung und dem Hintergrund geringer sind als bei einer Zeichnung auf weißem Papier. Wegen dieser unterschiedlichen Hintergrunddichten muß man bei der Umwandlung der meist in 256 Grauabstufungen mit dem Scanner gewonnenen Bildpunkte in binäre Bildpunkte für die erforderliche Schwarz/Weiß-Entscheidung unterschiedliche Schwellwerte benutzen.

Bisher hat man die vom Scanner in unterschiedlichen Grauabstufungen gewonnenen Pixeldaten dem Rechner zugeführt und dort zunächst die Schwellwerte gewonnen. Dann hat man mit den Schwellwerten und den abgespeicherten, in unterschiedlichen Grauabstufungen vorliegenden Pixeldaten die binären Daten erzeugt. Nachteilig hierbei ist, daß der Rechner für die Erzeugung der binären Daten einen großen Arbeitsspeicher haben muß, damit die hohe Anzahl von Pixeldaten zur Erzeugung der Schwellwerte abgespeichert und verarbeitet werden kann. Wenn eine größere Anzahl von Filmdatenkarten nacheinander gescannt werden soll, dann macht es sich bei dieser Vorgehensweise zudem nachteilig bemerkbar, daß die Schwellwerte und die binären Daten nacheinander gewonnen werden müssen, so daß zum Digitalisieren einer Filmdatenkarte relativ viel Zeit erforderlich ist.

In US-A-5 065 257 werden Schwellwerte auf der Basis von Abtastwerten einer Vorlage ermittelt, die einem Teil (Fenster) dieser Vorlage entsprechen, und während eines Prescans erzeugt werden, vor dem Mainscan der Vorlage.

Der Erfindung liegt das Problem zugrunde, ein Verfahren der eingangs genannten Art so auszubilden, daß mit möglichst geringer Rechnerleistung und möglichst rasch hintereinander Vorlagen gescannt werden können. Weiterhin soll ein Filmkartenscanner zur Durchführung dieses Verfahrens entwickelt werden. Die Erfindung wird in Anspruch 1 und in Anspruch 3 definiert.

Das erstgenannte Problem wird erfindungsgemäß dadurch gelöst, daß die Vorlage zeitlich nacheinander mit einem Prescanner und einem Mainscanner abgetastet wird, wobei der Prescanner ausschließlich zur Gewinnung einer Bildmatrix für die Schwellwertermittlung dient und hierzu im Vergleich zu dem Mainscanner nur eine geringe Anzahl von Matrixelementen hat und daß zur Erzeugung der binären Bildmatrix ausschließlich die die Schwellwerte übersteigenden Pixeldaten des Mainscanners benutzt werden.

Durch diese erfindungsgemäße Verwendung eines Prescanners mit geringer örtlichen Auflösung, wird eine im Vergleich zum Mainscanner verhältnismäßig geringe Datenmenge erzeugt, die dem Rechner zugeführt und aus der die Schwellwerte gebildet werden müssen. Dadurch kann der Rechner kleiner ausgebildet werden als wenn er zur Erzeugung der Schwellwerte die Daten eines Scanners mit hoher Auflösung verarbeiten müßte. Bei der Digitalisierung einer größeren Anzahl von Vorlagen kann das Prescannen einer Vorlage schon dann geschehen, wenn noch eine vorangehende Vorlage im Mainscanner gescannt wird. Das Gewinnen der Schwellwerte verläuft deshalb parallel zum eigentlichen Scannen der Vorlage mit hoher Auflösung, so daß das Digitalisieren einer Vielzahl von Filmdatenkarten hintereinander insgesamt wesentlich schneller erfolgt als nach dem bisherigen Verfahren.

Vorlagen haben oftmals über ihre Fläche eine relativ unterschiedliche Hintergrunddichte, beispielsweise dann, wenn einzelne Bereiche der Vorlage unterschiedlich vergilbt sind. Ganz besonders stark schwankt die Hintergrunddichte, wenn auf Blaupausen einzelne Bereiche abgeändert wurden, so daß diese geänderten Bereiche im Gegensatz zur übrigen Blaupause weißen Hintergrund haben. Auch aus Vorlagen mit stark schwankender Hintergrunddichte lassen sich zuverlässig digitale Daten gewinnen, wenn in Weiterbildung des erfindungsgemäßen Verfahrens aus den mit dem Prescanner gewonnenen Bildpunkten jeweils einzelne Schwellwert ermittelt werden, welche für die von den einzelnen Bildpunkten der Bildmatrix des Prescanners abgedeckten vielen Bildpunkte der Bildmatrix des Mainscanners für die Schwarz/Weiß-Entscheidung herangezogen werden.

Die zweitgenannte Aufgabe, nämlich die Schaffung eines Filmkartenscanners zur Durchführung des Verfahrens nach zumindest einem der vorangehenden Ansprüchen, mit dem mittels eines Rechners eine zweidimensionale Matrix von binären Bildpunkten erzeugbar ist, wird erfindungsgemäß dadurch gelöst, daß der Filmkartenscanner einen Mainscanner mit einer hohen örtlichen Auflösung und großer Grauabstufung und einen Prescanner mit geringer örtlichen Auflösung und großer Grauabstufung hat und daß der Rechner zur Gewinnung von Schwellwerten aus der Matrix des Prescanners ausgebildet ist, welche zur Schwarz/Weiß-Entscheidung bei der Erzeugung der binären Bildpunkte aus den Pixeldaten des Mainscanners herangezogen werden.

Mit einem solchen Filmkartenscanner lassen sich sehr rasch hintereinander die Filmbilder digitalisieren. Da mittels des Prescanners jeweils entsprechend der unterschiedlichen Hintergrunddichte optimale Schwellwerte für die Schwarz/Weiß-Entscheidungen ermittelt werden, entstehen die binären Pixeldaten mit hoher Zuverlässigkeit.

Konstruktiv und für den Arbeitsablauf vorteilhaft ist es, wenn der Prescanner und der Mainscanner in einem Gehäuse hintereinander angeordnet sind.

Zur weiteren Verdeutlichung der Erfindung ist in der Zeichnung schematisch der Ablauf des erfindungsgemäßen Verfahrens dargestellt und wird nachfolgend beschrieben. Die Zeichnung zeigt perspektivisch einen Prescanner 1, durch den gerade eine Vorlage 2 läuft, bei der es sich beispielsweise um eine Zeichnung, ein beliebiges Schriftstück oder eine Filmdatenkarte handeln kann. Der Prescanner 1 hat nur eine geringe Anzahl von Matrixelementen, beispielsweise 400 Zeilen mit 300 Spalten, und erzeugt deshalb eine zweidimensionale Matrix 3 geringer örtlicher Auflösung, die jedoch mindestens 256 Grauabstufungen hat. Die Matrix 3 wird einem Arbeitsspeicher 4 eines Rechners 5 zugeführt, der aus diesen Daten in einer Schwellwertbildung 6 Schwellwerte 11 erzeugt.

Zusätzlich zum Prescanner 1 ist ein Mainscanner 7 vorgesehen, welcher ebenfalls mit mindestens 256 Grauabstufungen scannt, jedoch eine hohe Auflösung hat und deshalb Matrixelemente mit beispielsweise 20.000 Zeilen und 15.000 Spalten aufweist. Dieser Mainscanner 7 scannt die Vorlage 2, nachdem sie zuvor durch den Prescanner 1 geführt wurde. Der Mainscanner 7 erzeugt eine zweidimensionale Matrix 8 mit einer hohen Anzahl von Bildpunkten, ist also hochauflösend. Die Pixeldaten dieser Matrix 8 werden mit den zuvor in der Schwellwertbildung 6 erzeugten Schwellwerten 11 verglichen und als binäre Daten im Binärbildspeicher 9 des Rechners 5 als binäre Matrix 10 mit nur noch zwei Grauabstufungen abgespeichert. Die große Datenmenge der Matrix 8 des hochauflösenden Mainscanners 7 belastet somit nicht den Rechner 5, weil diese Datenmenge erst im Rechner abgespeichert werden muß, wenn sie durch die Umwandlung der Daten für die Grauabstufungen mittels der Schwellwerte und der damit verbundenen Schwarz/Weiß-Entscheidungen stark reduziert ist.

## Patentansprüche

1. Verfahren zum Erzeugen einer zweidimensionalen, binären Bildmatrix (10) von Bildpunkten mittels eines Rechners (5) und eines Scanners, welcher ein Bild einer Vorlage (2) abtastet und dabei eine Bildmatrix mit Bildpunkten hoher Grauabstufung gewinnt und bei dem aufgrund der Beschaffenheit des Bildes der Vorlage Schwellwerte (11) für die Schwarz/Weiß-Entscheidung bei der Erzeugung der binären Bildmatrix aus der mit Grauabstufungen gewonnenen Bildmatrix erzeugt werden, **dadurch gekennzeichnet**, daß die Vorlage zeitlich nacheinander mit einem Prescanner (1) und einem Mainscanner (7) abgetastet wird, wobei der Prescanner ausschließlich zur Gewinnung einer Bildmatrix (3) für die Schwellwertermittlung dient und hierzu im Vergleich zu dem Mainscanner nur eine geringe Anzahl von Matrixelementen hat, und daß zur Erzeugung der binären Bildmatrix ausschließlich die die Schwellwerte übersteigenden Pixeldaten des Mainscanners benutzt werden.

2. Verfahren nach Anspruch 1, **dadurch gekennzeichnet**, daß aus den mit dem Prescanner gewonnenen Bildpunkten jeweils einzelne Schwellwerte ermittelt werden, welche für die von den einzelnen Bildpunkten der Bildmatrix des Prescanners abgedeckten vielen Bildpunkte der Bildmatrix des Mainscanners für die Schwarz/Weiß-Entscheidung herangezogen werden.

3. Filmkartenscanner zur Durchführung des Verfahrens nach zumindest einem der vorangehenden Ansprüche, mit dem mittels eines Rechners (5) eine zweidimensionale Matrix (10) von binären Bildpunkten erzeugbar ist, wobei der Rechner so ausgebildet ist, daß er Schwellwerte für die Entscheidung bei der Erzeugung der binären Matrix aus der mit Grauabstufungen gewonnenenen Bildmatrix erzeugt, **dadurch gekennzeichnet,** daß er einen Mainscanner (7) mit einer hohen örtlichen Auflösung und großer Grauabstufung und einen Prescanner (1) mit geringer örtlichen Auflösung und großer Grauabstufung hat und daß der Rechner (5) zur Gewinnung der Schwellwerte (11) aus der Bildmatrix (3) des Prescanners (1) ausgebildet ist, welche zur Schwarz/Weiß-Entscheidung bei der Erzeugung der binären Bildpunkte aus den Pixeldaten des Mainscanners (7) herangezogen werden.

4. Filmkartenscanner nach Anspruch 3, **dadurch gekennzeichnet,** daß der Prescanner (1) und der Rechner (5) zum Ermitteln einzelner Schwellwerte aus den mit dem Prescanner gewonnenen Bildpunkten ausgebildet ist, welche für die von den einzelnen Bildpunkten der Bildmatrix des Prescanners abgedeckten vielen Bildpunkte der Bildmatrix des Mainscanners für die Schwarz/Weiß-Entscheidung herangezogen werden.

5. Filmkartenscanner nach den Ansprüchen 4 oder 5, **dadurch gekennzeichnet**, daß der Prescanner (1) und der Mainscanner (7) in einem Gehäuse hintereinander angeordnet sind.

## Claims

1. Method for generating a two-dimensional binary image matrix (10) of image dots by means of a computer (5) and a scanner which scans an image of an original (2) and produces an image matrix with image dots of high grey scale stepping and in which, on the basis of the quality of the original image, threshold values (11) for black/white discrimination in the generation of the binary image matrix are generated from the image matrix produced with grey scale steps, characterized in that the original is scanned, successively in time, with a prescanner (1) and a main scanner (7), the prescanner serving only to produce an image matrix (3) for determination of the threshold values and accordingly having only a small number of matrix elements in comparison with the main scanner, and in that only the pixel data of the main scanner which exceed the threshold values are used for generating the binary image matrix.

2. Method according to Claim 1, characterized in that individual threshold values are determined from the image dots produced with the prescanner and are used for black/white discrimination for the many image dots of the image matrix of the main scanner which are masked by the individual image dots of the image matrix of the prescanner.

3. Film card scanner for carrying out the method according to at least one of the preceding claims, which can be used for generating a two-dimensional matrix (10) of binary image dots by means of a computer (5), the computer being configured to generate threshold values for the discrimination in the generation of the binary matrix from the image matrix produced with grey scale steps, characterised in that it has a main scanner (7) with a high local resolution and large grey scale stepping and a prescanner (1) with low local resolution and large grey scale stepping and in that the computer (5) is configured to produce from the image matrix (3) of the prescanner (1) the threshold values (11) which are used for black/white discrimination in the generation of the binary image dots from the pixel data of the main scanner (7).

4. Film card scanner according to Claim 3, characterized in that the prescanner (1) [sic] and the computer (5) is configured to determine from the image dots produced with the prescanner individual threshold values which are used for black/white discrimination for the many image dots of the image matrix of the main scanner which are masked by the individual image dots of the image matrix of the prescanner.

5. Film card scanner according to Claim 4 or Claim 5, characterized in that the prescanner (1) and the main scanner (7) are arranged one after the other in a housing.

## Revendications

1. Procédé de réalisation d'une image matricielle (10) binaire à deux dimensions faite de pixels, au moyen d'un ordinateur (5) et d'un scanner, lequel parcourt une image d'un document (2) et obtient ainsi une image matricielle pixélisée à grand nombre de niveaux de gris, par lequel, en se basant sur la nature de l'image du document présenté, sont produites des valeurs limites (11) servant à la prise de décision " noir ou blanc " lors de la réalisation de l'image matricielle binaire à partir de l'image matricielle à niveaux de gris, caractérisé en ce que le document est parcouru, successivement dans le temps, par un scanner préliminaire (1) et un scanner principal (7), le scanner préliminaire servant exclusivement à obtenir une image matricielle (3) permettant de calculer les valeurs limites et ne possédant pour ce faire, en comparaison au scanner principal, qu'un petit nombre d'éléments matriciels, et en ce que, pour la réalisation de l'image matricielle binaire, ne sont utilisées que les données de pixelisation du scanner principal qui dépassent lesdites valeurs limites.

2. Procédé selon la revendication 1, caractérisé en ce que, à partir des pixels obtenus par le scanner préliminaire, sont calculées des valeurs limites isolées respectives qui servent à prendre la décision " noir ou blanc " appliquée aux nombreux pixels de l'image matricielle du scanner principal recouverts par les pixels isolés de l'image du scanner préliminaire.

3. Scanner pour film encarté destiné à la mise en oeuvre du procédé selon au moins l'une des revendications précédentes, qui permet au moyen d'un ordinateur (5) de réaliser une matrice (10) à deux dimensions de pixels binaires, ledit ordinateur (5) étant configuré pour la fourniture de valeurs limites pour la prise de décision " noir ou blanc ", caractérisé en ce qu'il possède un scanner principal (7) à haute définition locale et à nombre élevé de niveaux de gris, et un scanner préliminaire (1) à basse définition locale et à nombre élevé de niveaux de gris, et en ce que l'ordinateur (5) est configuré pour l'obtention de valeurs limites (11) à partir de l'image matricielle (3) du scanner préliminaire (1), lesquelles valeurs limites sont utilisées pour la prise de décision " noir ou blanc " lors de la production des pixels binaires à partir des données pixelisées du scanner principal (7).

4. Scanner selon la revendication 3, caractérisé en ce que le scanner préliminaire (1) et l'ordinateur (5) sont configurés pour calculer des valeurs limites isolées à partir des pixels obtenus à l'aide du scanner préliminaire, lesquelles valeurs limites étant utilisées pour la prise de décision " noir ou blanc " appliquée aux nombreux pixels de l'image matricielle du scanner principal recouverts par les pixels isolés du scanner préliminaire.

5. Scanner pour film encarté selon la revendication 4 ou 5, caractérisé en ce que le scanner préliminaire (1) et le scanner principal (7) sont disposés l'un derrière l'autre à l'intérieur d'un boîtier.
